# EUROPEAN PATENT APPLICATION

(11) **EP 4 650 091 A1**
(43) Date of publication of application: **19.11.2025**
(21) Application number: 24175478.7
(22) Date of filing: 13.05.2024
(51) Int. Cl.: B23K 10/00, B23K 26/08, B23K 26/38, B23K 37/02, B23K 101/06

(54) **DEVICE FOR CUTTING ELONGATE WORK PIECES, SUCH AS PIPES AND PROFILE SECTIONS**

(71) Applicant: HGG International B.V., 1771 SW Wieringerwerf (NL)
(72) Inventor: Kistemaker, Jacob Pieter, 1733 BD Nieuwe Niedorp (NL)
(74) Representative: 't Jong, Bastiaan Jacob

(57) **Abstract**

The invention relates to a device for cutting elongate work pieces, such as pipes and profiles, which device comprises:
- an elongate machine bed;
- a trolley having a main rotatable chuck for rotating an elongate work piece held in the main rotatable chuck, which trolley is movable over the machine bed in longitudinal direction;
- at least two secondary chucks having a through hole for rotatably supporting an elongate work piece held by the main rotatable chuck, which at least two secondary chucks are arranged on the elongate machine bed space apart from each other;
- a cutting station for cutting an elongate work piece held in the main rotatable chuck, which cutting station is arranged adjacent the machine bed; and
- at least two supports having a number of rollers for supporting an elongate work piece held by the main chuck, which at least two supports are arranged on the elongate machine bed spaced apart from each other;

wherein the at least two secondary chucks are movable between a support position, in which the elongate work piece can extend through the through hole of and be supported by the secondary chuck, and a stored position, in which the at least secondary chucks are positioned outside of the path of the elongate work piece; and
wherein the at least two supports are movable between a support position, in which the elongate work piece is supported onto the rollers of the support, while the elongate work piece is held by the main chuck, and a stored position, in which the at least two supports are positioned outside of the path of the elongate work piece.

## Description

The invention relates to a device for cutting elongate work pieces, such as pipes and profile sections, which device comprises:
- an elongate machine bed;
- a trolley having a main rotatable chuck for rotating an elongate work piece held in the main rotatable chuck, which trolley is movable over the machine bed in longitudinal direction;
- at least two secondary chucks having a through hole for rotatably supporting an elongate work piece held by the main rotatable chuck, which at least two secondary chucks are arranged on the elongate machine bed space apart from each other;
- a cutting station for cutting an elongate work piece held in the main rotatable chuck, which cutting station is arranged adjacent the machine bed.

Such a device is for example known from WO 2020120047. With this device a pipe is held by the main rotatable chuck and extends through a secondary chuck. A laser cutter is arranged adjacent the secondary chuck and is used to cut for example a length of the pipe, or to cut holes in the pipe wall, while the pipe is rotated by the main rotatable chuck.

If the elongate work piece is not straight, or too heavy, the work piece can no longer be machined in this known device.

Other cutting devices are known, in which the work piece, in particular metal sheets, is positioned on a table and a laser cutter is moved over the work piece to cut the desired parts. It is only possible to machine the work piece from one side and if also the opposite side needs to be machined, the work piece first needs to be re-positioned on the table.

It is an object of the invention to reduce or even remove the above mentioned disadvantages.

This object is achieved according to the invention with a device according to the preamble, which is characterized by at least two supports having a number of rollers for supporting an elongate work piece held by the main chuck, which at least two supports are arranged on the elongate machine bed spaced apart from each other;
wherein the at least two secondary chucks are movable between a support position, in which the elongate work piece can extend through the through hole of and be supported by the secondary chuck, and a stored position, in which the at least secondary chucks are positioned outside of the path of the elongate work piece; and
wherein the at least two supports are movable between a support position, in which the elongate work piece is supported onto the rollers of the support, while the elongate work piece is held by the main chuck, and a stored position, in which the at least two supports are positioned outside of the path of the elongate work piece.

The device according to the invention can be put in a rotational mode and in a conveyor mode. In the rotational mode, the work piece is supported by the secondary chucks and rotated by the main rotatable chuck and moved in longitudinal direction of the machine bed by the trolley, while the cutting station cuts the work piece. In the conveyor mode, the work piece is supported onto the rollers of the supports, while being cut by the cutting station. The work piece is only moved in longitudinal direction of the machine bed by the trolley and is not rotated.

So, with the device according to the invention, both elongate work pieces, which cannot be rotated, can be cut by the cutting station as well as elongate work pieces, which can be rotated, can be cut by the cutting station.

A further advantage of the device according to the invention is that the supports can be moved to a stored position, such that when the trolley needs to pass beyond one of the supports, said support can be moved out of the way and the trolley can be advanced further.

In a preferred embodiment of the device according to the invention the at least two secondary chucks are rotatable around a rotation axis parallel and at a distance of the axis of the main rotatable chuck or are movable in a direction perpendicular to the rotation axis of the main rotatable chuck to move from the support position to the stored position, and vice versa.

The secondary chucks typically have a substantial height, as the work piece should be able to extend through the through hole. Rotating the secondary chucks between the stored position and support position will provide for an easy and controllable movement. As alternative, the secondary chucks can be moved in a direction perpendicular to the rotation axis of the main chuck.

In a further preferred embodiment of the device according to the invention the at least two supports move from the support position to the stored position, and vice versa, in a direction perpendicular to the rotation axis of the main rotatable chuck.

A support with rollers is relative compact and can easily be stored in or under the machine bed. Furthermore, the linear movement in a direction perpendicular to the rotation axis of the main rotatable chuck also allows for an actuator, such as a hydraulic cylinder, to be used, which can easily handle the weight of the work piece.

In another embodiment of the device according to the invention each support is arranged on top of one of the at least two secondary chucks. This allows for the use of a single linear guide to move both a secondary chuck and a support between their respective stored position and support position. The stored position of the secondary chuck corresponds to the support position of the support and vice versa.

In a further preferred embodiment of the device according to the invention the cutting station comprises a laser cutter or a plasma cutter.

Preferably the laser cutter or plasma cutter is manipulated by a serial manipulator or robotic arm. This allows for a large degree of freedom in the directions in which can be cut. Even when the work piece is supported onto the rollers of the support, the serial manipulator or robotic arm allows for cuts to be made on each side of the work piece.

These and other features of the invention will be elucidated in conjunction with the accompanying drawings.
Figure 1 shows a schematic view of an embodiment of a device according to the invention in the rotational mode.
Figure 2 shows the device of figure 1 in the conveyor mode.

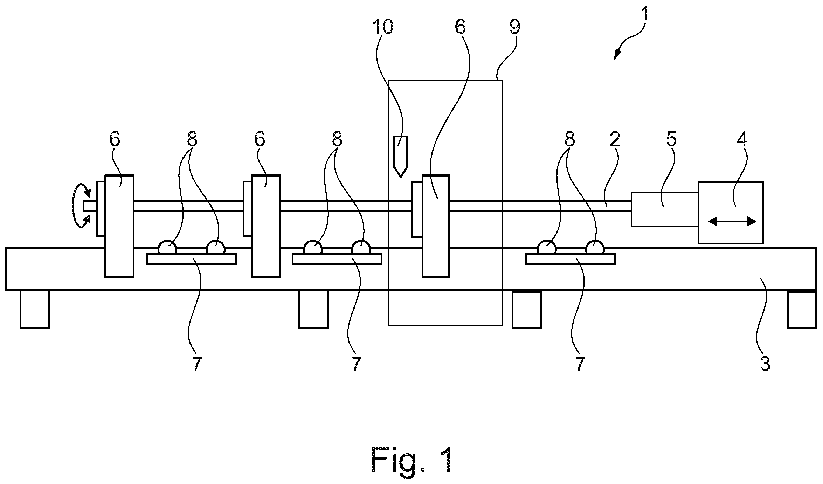

Figure 1 shows a device 1 for cutting an elongate work piece 2, such as a tube or profile. The device 1 has a machine bed 3 on which a trolley 4 is arranged and which trolley 4 is movable in the longitudinal direction of the machine bed 3.

The trolley 4 has a main rotatable chuck 5, which holds the work piece 2 and can rotate the work piece 2 around the longitudinal axis.

The device 1 has further three secondary chucks 6 arranged on the machine bed 3 and space apart from each other. The work piece 2 extends through the chucks 6 and is supported by these secondary chucks 6. The device 1 also has supports 7 with a number of rollers 8 arranged on the machine bed 3.

Figure 1 shows the rotational mode of device 1 and in this mode, the secondary chucks 6 are positioned in the support position, while the supports 7 are positioned in the stored position.

A cutting station 9 is furthermore arranged adjacent the machine bed 3 and comprises a cutting tool 10, such as a laser cutter or a plasma cutter. The cutting tool 10 is shown schematically and can be manipulated in a suitable way, for example with a robotic arm. This allows for the elongate work piece 2, in combination with the rotation of the work piece 2, to be cut along the full circumference of the work piece. The movement of the work piece 2 by the trolley 4 allows for cutting along at least part of the length of the work piece 2.

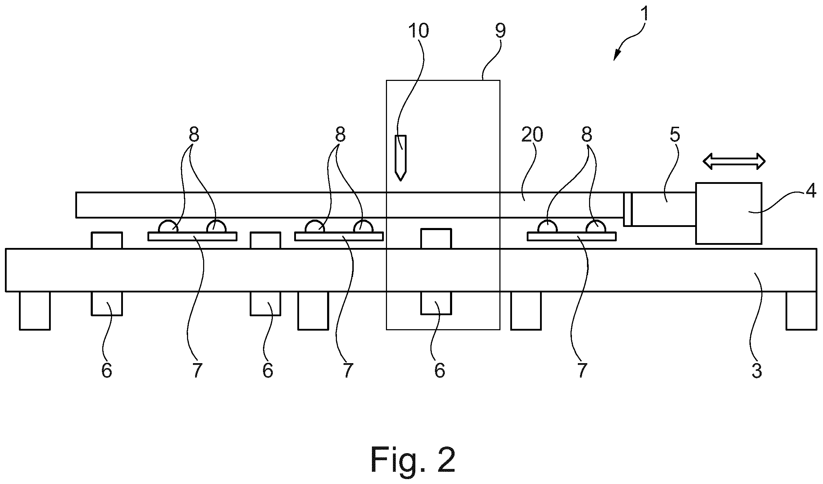

Figure 2 shows the device 1 in a conveyor mode. A larger elongate work piece 20 is arranged on the device 1 and held by the main chuck 5 of the trolley 4. The supports 7 with rollers 8 have been moved to the support position, such that the work piece 20 is supported by the rollers 8 of the supports 7. The secondary chucks 6 have been positioned outside of the path of the elongate work piece 20.

By moving the work piece 20 with the trolley 4 over the machine bed 3, the cutting tool 10 can make cuts along the length of the elongate work piece 20. By further manipulating the cutting tool 10, for example with a robotic arm, it will also be possible to cut the work piece 20 along the circumference.

## Claims

1. Device for cutting elongate work pieces, such as pipes and profiles, which device comprises:
- an elongate machine bed;
- a trolley having a main rotatable chuck for rotating an elongate work piece held in the main rotatable chuck, which trolley is movable over the machine bed in longitudinal direction;
- at least two secondary chucks having a through hole for rotatably supporting an elongate work piece held by the main rotatable chuck, which at least two secondary chucks are arranged on the elongate machine bed space apart from each other;
- a cutting station for cutting an elongate work piece held in the main rotatable chuck, which cutting station is arranged adjacent the machine bed;
**characterized by**
- at least two supports having a number of rollers for supporting an elongate work piece held by the main chuck, which at least two supports are arranged on the elongate machine bed spaced apart from each other;
wherein the at least two secondary chucks are movable between a support position, in which the elongate work piece can extend through the through hole of and be supported by the secondary chuck, and a stored position, in which the at least secondary chucks are positioned outside of the path of the elongate work piece; and
wherein the at least two supports are movable between a support position, in which the elongate work piece is supported onto the rollers of the support, while the elongate work piece is held by the main chuck, and a stored position, in which the at least two supports are positioned outside of the path of the elongate work piece.

2. Device according to claim 1, wherein the at least two secondary chucks are rotatable around a rotation axis parallel and at a distance of the axis of the main rotatable chuck or are movable in a direction perpendicular to the rotation axis of the main rotatable chuck to move from the support position to the stored position, and vice versa.

3. Device according to claim 1 or 2, wherein the at least two supports move from the support position to the stored position, and vice versa, in a direction perpendicular to the rotation axis of the main rotatable chuck.

4. Device according to claim 3, wherein each support is arranged on top of one of the at least two secondary chucks.

5. Device according to any of the preceding claims, wherein the cutting station comprises a laser cutter or a plasma cutter.

6. Device according according to claim 5, wherein the laser cutter of plasma cutter is manipulated by a serial manipulator or robotic arm.
